# EUROPEAN PATENT APPLICATION

(11) **EP 4 568 126 A1**
(43) Date of publication of application: **11.06.2025**
(21) Application number: 22954032.3
(22) Date of filing: 04.08.2022
(51) Int. Cl.: H04B 7/024, H04B 7/0413

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/029972
(87) International publication number: WO 2024/029044

(57) **Abstract**

A terminal according to an aspect of the present disclosure includes a receiving section that receives an indication of two precoding matrices, each of the two precoding matrices being used for an antenna port of one panel and corresponding to a layer of one panel, and a control section that controls, based on the two precoding matrices, multi-panel simultaneous transmission using two panels. According to an aspect of the present disclosure, it is possible to appropriately perform simultaneous transmission using a plurality of panels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), a terminal (user terminal, User Equipment (UE)) can use one of a plurality of panels (plurality of beams) for uplink (UL) transmission. However, a study has not been sufficiently made on simultaneous transmission using the plurality of panels. Unless the simultaneous transmission using the plurality of panels is performed appropriately, degradation in system performance, such as throughput reduction, may occur.

In view of this, the present disclosure has one object to provide a terminal, a radio communication method, and a base station that appropriately perform simultaneous transmission using a plurality of panels.

### Solution to Problem

A terminal according to an aspect of the present disclosure includes a receiving section that receives an indication of two precoding matrices, each of the two precoding matrices being used for an antenna port of one panel and corresponding to a layer of one panel, and a control section that controls, based on the two precoding matrices, multi-panel simultaneous transmission using two panels.

### Advantageous Effects of Invention

According to an aspect of the present disclosure, it is possible to appropriately perform simultaneous transmission using a plurality of panels.

### Brief Description of Drawings

[FIG. 1] FIG. 1 is a diagram to show an example of association between precoder types and TPMI indices.
[FIG. 2] FIGS. 2A to 2C are diagrams to show examples of multi-panel transmission.
[FIG. 3] FIGS. 3A to 3C are diagrams to show other examples of the multi-panel transmission.
[FIG. 4] FIG. 4 shows an example of an association (table) between a precoding information and number of layers field value, and the number of layers and a TPMI.
[FIG. 5] FIG. 5A is a diagram to show layers in a case where simultaneous transmission from two different UE panels is performed by using one codeword (CW). FIG. 5B is a diagram to show layers in a case where simultaneous transmission from two different UE panels is performed by using two codewords (CWs).
[FIG. 6] FIG. 6 is a diagram to show an example of application of a precoding matrix in Option 1.
[FIG. 7] FIG. 7 is a diagram to show an example of application of a precoding matrix in Option 2.
[FIG. 8] FIG. 8 is a diagram to show a relationship between the number of SRS ports of two panels and a maximum rank of SDM of multi-panel simultaneous transmission.
[FIG. 9] FIG. 9 is a diagram to show a relationship between four antenna ports, a precoding matrix (W), and two layers across two ports in Case 1.
[FIG. 10] FIG. 10 is a diagram to show a precoding matrix for two-layer transmission with 4 antenna ports and transform precoding being disabled.
[FIG. 11] FIG. 11 is a diagram to show a relationship between four antenna ports, a precoding matrix (W), and three layers across two ports in Case 2.
[FIG. 12] FIG. 12 is a diagram to show a precoding matrix for three-layer transmission with 4 antenna ports and transform precoding being disabled.
[FIG. 13] FIG. 13 is a diagram to show a relationship between four antenna ports, a precoding matrix (W), and four layers across two ports in Case 2.
[FIG. 14] FIG. 14 is a diagram to show a precoding matrix for four-layer transmission with 4 antenna ports and transform precoding being disabled.
[FIG. 15] FIG. 15 is a diagram to show a relationship between two antenna ports, a precoding matrix (W), and two layers across two ports in Case 4.
[FIG. 16] FIG. 16 is a diagram to show a precoding matrix for two-layer transmission with 2 antenna ports and transform precoding being disabled.
[FIG. 17] FIG. 17 is a diagram to show an example of a maximum rank of an SDM scheme and the number of SRS ports of each panel in Option 1.
[FIG. 18] FIG. 18 is a diagram to show an example of a maximum rank of an SDM scheme and the number of SRS ports of each panel in Option 2.
[FIG. 19] FIG. 19 is a diagram to show an example of a schematic structure of a radio communication system according to one embodiment.
[FIG. 20] FIG. 20 is a diagram to show an example of a structure of a base station according to one embodiment.
[FIG. 21] FIG. 21 is a diagram to show an example of a structure of a user terminal according to one embodiment.
[FIG. 22] FIG. 22 is a diagram to show an example of a hardware structure of the base station and the user terminal according to one embodiment.
[FIG. 23] FIG. 23 is a diagram to show an example of a vehicle according to one embodiment.

### Description of Embodiments

### (PUSCH Precoder)

For NR, it is studied that a UE supports at least one of codebook (CB) based transmission and non-codebook (NCB) based transmission.

For example, it is studied that the UE judges a precoder (precoding matrix) for at least one of CB based and NCB based uplink shared channel (Physical Uplink Shared Channel (PUSCH)) transmission by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of PMIs specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

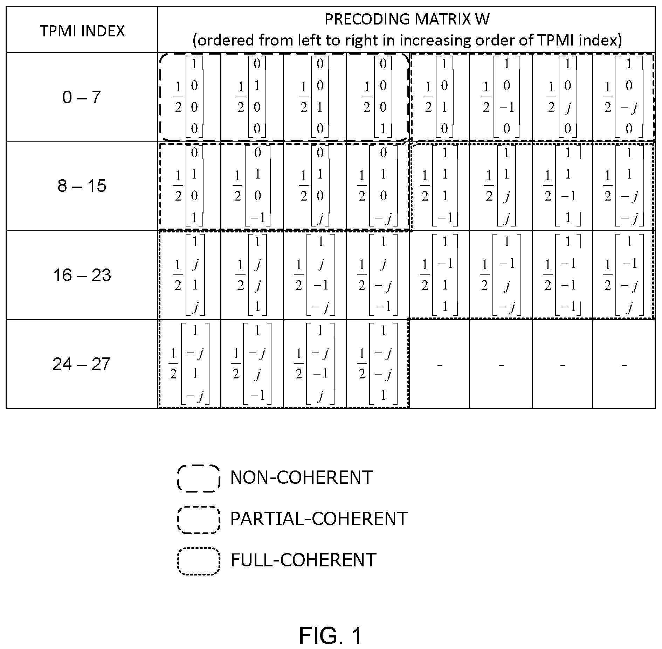

FIG. 1 is a diagram to show an example of association between precoder types and TPMI indices. FIG. 1 corresponds to a table of a precoding matrix W for single-layer (rank 1) transmission using 4 antenna ports in DFT-s-OFDM (Discrete Fourier Transform spread OFDM, transform precoding is enabled).

In FIG. 1, when a precoder type (codebookSubset) is fullyAndPartialAndNonCoherent, the UE is notified of a TPMI of any of 0 to 27 for the single-layer transmission. When the precoder type is partialAndNonCoherent, the UE is configured with a TPMI of any of 0 to 11 for the single-layer transmission. When the precoder type is nonCoherent, the UE is configured with a TPMI of any of 0 to 3 for the single-layer transmission.

Note that, as shown in FIG. 1, precoding matrices each having only one non-zero element of each column may be referred to as a non-coherent codebook. Precoding matrices each having a certain number of non-zero elements of each column (except for all the elements) may be referred to as a partial coherent codebook. Precoding matrices each having all the elements of each column being non-zero may be referred to as a fully coherent codebook.

The non-coherent codebook and the partial coherent codebook may be referred to as an antenna selection precoder. The fully coherent codebook may be referred to as a non-antenna selection precoder.

Note that, in the present disclosure, the partial coherent codebook may correspond to the codebook obtained by removing a codebook corresponding to a TPMI specified for the UE configured with a non-coherent codebook subset (for example, an RRC parameter "codebookSubset" = "nonCoherent"), from codebooks (precoding matrices) corresponding to TPMIs specified by DCI for codebook based transmission for the UE configured with a partial coherent codebook subset (for example, an RRC parameter "codebookSubset" = "partialAndNonCoherent") (in other words, a codebook with TPMIs = 4 to 11 in a case of single-layer transmission with 4 antenna ports).

Note that, in the present disclosure, the fully coherent codebook may correspond to the codebook obtained by removing a codebook corresponding to a TPMI specified for the UE configured with a partial coherent codebook subset (for example, an RRC parameter "codebookSubset" = "partialAndNonCoherent"), from codebooks (precoding matrices) corresponding to TPMIs specified by DCI for codebook based transmission for the UE configured with a fully coherent codebook subset (for example, an RRC parameter "codebookSubset" = "fullyAndPartialAndNonCoherent") (in other words, a codebook with TPMIs = 12 to 27 in a case of single-layer transmission with 4 antenna ports).

### (Spatial Relations for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic SRS (A-SRS, AP-SRS). Note that the UE may periodically (or, after activation, periodically) transmit the P-SRS and the SP-SRS, and may transmit the A-SRS, based on an SRS request of DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching, or the like. An SRS with codebook based transmission or non-codebook based transmission usage may be used to determine a precoder for codebook based or non-codebook based PUSCH transmission based on an SRI.

For example, in a case of codebook based transmission, the UE may determine a precoder for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, a time and/or frequency resource location, resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information about a spatial relation between a certain reference signal and an SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the above-described certain reference signal, at least one of an SSB index, a CSI-RS resource ID, and an SRS resource ID.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The SRS spatial relation information may include a serving cell index, a BWP index (BWP ID), and the like corresponding to the above-described certain reference signal.

In NR, uplink signal transmission may be controlled based on the presence or absence of beam correspondence (BC). The BC may be, for example, a capability of a certain node (for example, the base station or the UE) to determine a beam (transmit beam or Tx beam) used for signal transmission, based on a beam (receive beam or Rx beam) used for signal reception.

Note that the BC may be referred to as transmit/receive beam correspondence (Tx/Rx beam correspondence), beam reciprocity, beam calibration, calibrated/non-calibrated, reciprocity calibrated/non-calibrated, a level of correspondence, a level of coincidence, and so on.

For example, when the BC is absent, the UE may transmit an uplink signal (for example, a PUSCH, a PUCCH, an SRS, or the like) by using a beam (spatial domain transmission filter) identical to that of an SRS (or SRS resource) indicated from the base station, based on a measurement result of one or more SRSs (or SRS resources).

On the other hand, when the BC is present, the UE may transmit an uplink signal (for example, a PUSCH, a PUCCH, an SRS, or the like) by using a beam (spatial domain transmission filter) identical to or corresponding to a beam (spatial domain reception filter) used for reception of a certain SSB or CSI-RS (or CSI-RS resource).

Regarding a certain SRS resource, when spatial relation information related to an SSB or CSI-RS and an SRS is configured (for example, when the BC is present), the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

Regarding a certain SRS (target SRS) resource, when spatial relation information related to another SRS (reference SRS) and the SRS (target SRS) is configured (for example, when the BC is absent), the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a certain field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") for an SRS resource determined based on the value of the certain field (for example, the SRI).

When codebook based transmission is used for the PUSCH, the UE may be configured with two SRS resources by RRC, and one of the two SRS resources may be indicated for the UE by DCI (1-bit certain field). When non-codebook based transmission is used for the PUSCH, the UE may be configured with four SRS resources by the RRC, and one of the four SRS resources may be indicated for the UE by the DCI (2-bit certain field). RRC reconfiguration is necessary for use of a spatial relation other than the two or four spatial relations configured by the RRC.

Note that a DL-RS is configurable for spatial relations for the SRS resources used for the PUSCH. For example, for an SP-SRS, the UE is configured with spatial relations for a plurality of (for example, up to 16) SRS resources by RRC, and one of the plurality of SRS resources can be indicated for the UE by a MAC CE.

### (Multi-panel Transmission)

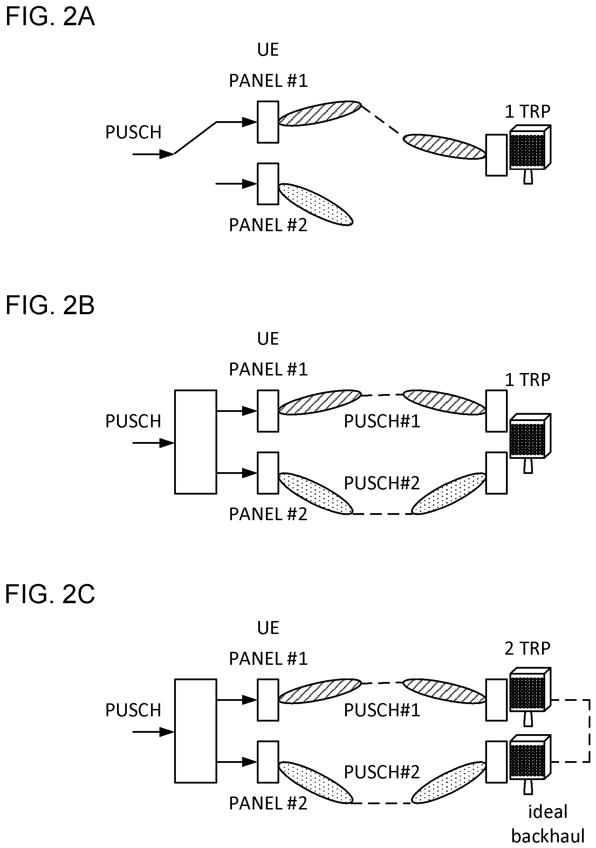

In a UE of Rel. 15 and Rel. 16, only one beam and panel is used for UL transmission at one timing (FIG. 2A). For Rel. 17, it is studied that simultaneous UL transmission, with a plurality of beams and a plurality of panels, to one or more TRPs is performed for improvement of UL throughput and reliability.

For simultaneous UL transmission using a plurality of beams and a plurality of panels, reception by one TRP including a plurality of panels (FIG. 2B) or reception by two TRPs including an ideal backhaul (FIG. 2C) is under study. A single PDCCH for scheduling a plurality of PUSCHs (for example, simultaneous transmissions of PUSCH #1 and PUSCH #2) is under study. It is studied that panel-specific transmission is supported and a panel ID is introduced.

The base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relation information).

### <Multi-panel UL Transmission Scheme>

A multi-panel UL transmission scheme or candidates for the multi-panel UL transmission scheme may be at least one of Schemes 1 to 3 below (multi-panel UL transmission schemes 1 to 3). Only one of Schemes 1 to 3 may be supported. A plurality of schemes including at least one of Schemes 1 to 3 may be supported, and one of the plurality of schemes may be configured for the UE.

### <<Scheme 1>>

Coherent multi-panel UL transmission.

A plurality of panels may be synchronized with each other. All the layers are mapped to all the panels. A plurality of analog beams are indicated. An SRS resource indicator (SRI) field may be enhanced. This scheme may use up to four layers for UL.

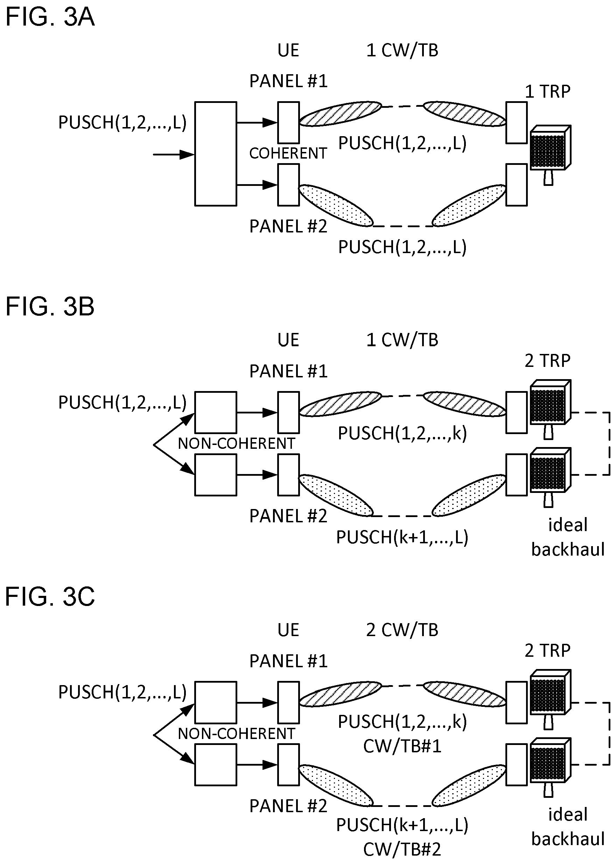

In an example in FIG. 3A, the UE maps one codeword (CW) or one transport block (TB) to L layers (PUSCH (1, 2, ..., L)) to transmit L layers from each of the two panels. Panel #1 and panel #2 are coherent with each other. Scheme 1 allows a gain by diversity to be obtained. A total number of layers in the two panels is 2L. When a maximum value of the total number of layers is 4, a maximum value of the number of layers in one panel is 2.

### <<Scheme 2>>

Non-coherent multi-panel UL transmission with one codeword (CW) or transport block (TB).

A plurality of panels may not be synchronized with each other. Different layers are mapped to different panels and one CW or TB for PUSCHs from the plurality of panels. Layers corresponding to one CW or TB may be mapped to the plurality of panels. This scheme may use up to four layers or up to eight layers for UL. When up to eight layers are supported, this scheme may support one CW or TB using up to eight layers.

In an example in FIG. 3B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Scheme 2 allows a gain by multiplexing and diversity to be obtained. A total number of layers in the two panels is L.

### <<Scheme 3>>

Non-coherent multi-panel UL transmission with two CWs or TBs.

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This scheme may use up to four layers or up to eight layers for UL. When up to eight layers are supported, this scheme may support up to four layers per CW or TB.

In an example in FIG. 3C, the UE maps CW #1 or TB #1 and CW #2 or TB #2 of the two CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Scheme 3 allows a gain by multiplexing and diversity to be obtained. A total number of layers in the two panels is L.

### <Indication of Plurality of PUSCHs>

A plurality of PUSCHs may be indicated by a single PDCCH. One piece of DCI may schedule a plurality of PUSCHs. The DCI may include one or more SRI fields for indication of panels (beams, SRS resources) for the plurality of PUSCHs. One or more SRI fields may indicate a plurality of SRS resources. The plurality of SRS resources may correspond to a plurality of respective PUSCHs (panels, beams). The UE may use each of the plurality of SRS resources for transmission of a corresponding PUSCH.

### <<Indication of Plurality of PUSCHs Using Scheme 2>>

For Scheme 2, a plurality of PUSCHs may be indicated by a single PDCCH. SRI field enhancement for Scheme 2 may have the following characteristics.

For layers 1, 2, ..., k of L layers, the UE may use, for a spatial filter for UL transmission from panel 1, an SRI (SRS #i) indicated first by an SRI field in DCI. For remaining layers k+1, k+2, ..., L of the L layers, the UE may use, for a spatial filter for UL transmission from panel 2, an SRI (SRS #j) indicated second by the SRI field in the DCI.

k may follow a predefined rule or may be explicitly indicated by DCI.

The rule may be k=ceil(L/2) or k=floor(L/2).

For the explicit indication of k, a precoding information and number of layers field in the DCI may be reused. A size of this field in the DCI for indicating a plurality of PUSCHs may be the same as that in the DCI for indicating a single PUSCH, or may be larger than that in the DCI for indicating the single PUSCH. When a total number of layers is 1 or 2, a table of precoding information and number of layers for a single PUSCH (Rel. 15) may be reused. When the total number of layers is 3 or 4, an index indicated by this field may indicate two layers and a TPMI for two panels.

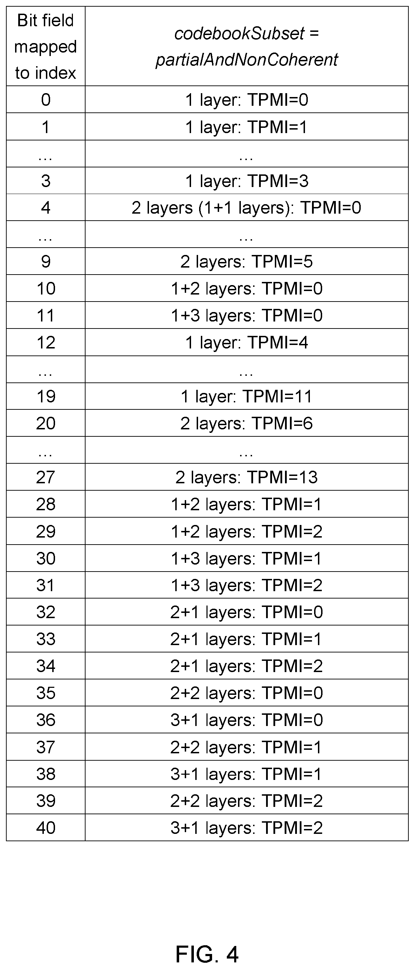

A new table for mapping between a codeword and a layer may be defined in a specification. FIG. 4 shows an example of an association (table) between a precoding information and number of layers field value, and the number of layers and a TPMI. This table is a table for four antenna ports in a case where transform precoding is disabled and where a maximum rank (maxRank) is 2, 3, or 4.

In this table, the number of layers in a case where only panel #1 is used is represented as "L layers," and the number k of layers for panel #1 and the number L-k of layers for panel #2 in a case where panels #1 and #2 are used are represented as "k+(L-k) layers." 2 layers (L=2) in this table may correspond to the number of layers for panel #1 (k=1) being 1 and the number of layers for panel #2 being 1. In this table, 2 layers may be represented as "2 layers" or "1+1 layers."

### <<Indication of Plurality of PUSCHs Using Scheme 3>>

For Scheme 3, a plurality of PUSCHs may be indicated by a single PDCCH.

As SRI field enhancement for Scheme 3, to support two CWs or TBs for different TRPs and to indicate a plurality of PUSCHs, in addition to the SRI field enhancement in the case where Scheme 2 is used, at least one of a modulation and coding scheme (MCS) field, a precoding information and number of layers field, a transmission power control (TPC) command for scheduled PUSCH field, a frequency domain resource assignment field, and a time domain resource assignment field in DCI may be enhanced. The different TRPs may include different path losses, or may include different SINRs.

### {Precoding Information and Number of Layers Field}

The precoding information and number of layers field may be enhanced to indicate at least one of a layer and a TPMI for a plurality of PUSCHs for codebook based UL transmission.

### {{Option 1}}

To indicate the plurality of PUSCHs, a plurality of "precoding information and number of layers" fields in DCI may be used.

### {{Option 2}}

Enhancing the table defined in the specification may maintain one "precoding information and number of layers" field to indicate the plurality of PUSCHs. A size of the "precoding information and number of layers" field for the plurality of PUSCHs may be the same as that for a single PUSCH, or may be larger than that for the single PUSCH.

For layer and rank indication, the same k as that in the case where Scheme 2 is used may be used. In the same manner as that in the case where Scheme 2 is used, k may follow a predefined rule or may be explicitly indicated by DCI.

For TPMI indication, one TPMI indication may be maintained for each index indicated by the "precoding information and number of layers" field. The one TPMI indication may be a joint TPMI. The TPMI may be applied to a plurality of panels.

For TPMI indication, in the new table defined in the specification, two TPMIs may be indicated for each index indicated by the "precoding information and number of layers" field. Each TPMI may be applied to one panel.

### <Mapping of DMRS Port>

A study has not been sufficiently made on mapping of a DMRS port in a case where the non-coherent multi-panel UL transmission with one/two CWs or TBs, described in Scheme 2 or Scheme 3 described above, is applied. For example, a study has not been sufficiently made on mapping of a DMRS port corresponding to each PUSCH/SRI/TPMI/TPC in a case where a plurality (plurality of sets) of SRIs/TPMIs/TPCs are indicated. Hence, the inventors of the present invention came up with the idea of a method for appropriately performing mapping of a DMRS port in a case where non-coherent multi-panel UL transmission with one/two CWs or TBs is applied, as follows.

When new RRC configuration is used, the UE may be scheduled to simultaneously transmit, to different TRPs, one or two PUSCHs/CWs/TBs with different data/layers on different beams/panels. When this new RRC configuration is used, Aspects 2-1 to 2-3 below may be applied to a case where a plurality (plurality of sets) of SRIs/TPMIs/TPCs are indicated in DCI for scheduling a PUSCH.

In Aspects 2-1 to 2-3, the UE receives, when using a plurality of non-coherent panels, downlink control information (DCI) including at least one of a sounding reference signal resource indicator (SRI), a transmitted precoding matrix indicator (TPMI), and a transmission power control command (TPC command) corresponding to a code division multiplexing (CDM) group. The UE transmits the PUSCH, based on the DCI. In the present disclosure, TPC and a TPC command may be interchangeably interpreted.

### {Aspect 2-1}

When a DCI field "Antenna Port (s)" indicates a DM-RS port in two CDM groups, a first (first set of) SRI(s)/TPMI(s)/TPC(s) and a second (second set of) SRI(s)/TPMI(s)/TPC(s) may correspond to a CDM group for a first antenna port indicated by an antenna port indication table, and another CDM group, respectively.

### {Aspect 2-2}

When the DCI field "Antenna Port (s)" indicates a DM-RS port in three CDM groups, one of Options 1 to 3 below may be applied.

### {{Option 1}}

The first (first set of) SRI(s)/TPMI(s)/TPC(s) and the second (second set of) SRI(s)/TPMI(s)/TPC(s) correspond to CDM groups for first and second antenna ports indicated by the antenna port indication table, and a third CDM group, respectively.

### {{Option 2}}

The first (first set of) SRI(s)/TPMI(s)/TPC(s) and the second (second set of) SRI(s)/TPMI(s)/TPC(s) correspond to a CDM group for a first antenna port indicated by the antenna port indication table, and second and third CDM groups, respectively.

### {{Option 3}}

In a new transmission scheme for multi-panel transmission (for example, at least one of Schemes 1 to 3 described above), the UE does not assume indication by three CDM groups.

### {Aspect 2-3}

When the DCI field "Antenna Port (s)" indicates a DM-RS port in one CDM group, Option 1 or 2 below may be applied.

### {{Option 1}}

The UE does not assume DM-RS ports in CDM groups indicated by a plurality (plurality of sets) of SRIs/TPMIs/TPCs.

### {{Option 2}}

A new codeword-layer mapping table may be defined to indicate two indications of layers (for two panels) and TPMIs for each entry. For example, an association (table) between a precoding information and number of layers field value, and the number of layers and a TPMI, shown in FIG. 4, may be applied.

Furthermore, in a case of one or two PUSCHs/CWs/TBs with different data/layers from different beams/panels, the UE does not assume different DM-RS configurations for an actual number of front-loaded DM-RS symbols, an actual number of additional DM-RS symbols, an actual DM-RS symbol location, and a DM-RS configuration type.

### (Space Division Multiplexing (SDM) Scheme)

In Rel. MIMO, one objective is multi-panel simultaneous transmission (Simultaneous Transmission across Multiple Panels (STxMP)). For Customer Premises Equipment (CPE) / Fixed Wireless Access (FWA) / on-vehicle/industrial apparatus (when applicable), a study has been made to facilitate multi-panel simultaneous transmission for UL throughput/reliability enhancement, under assumption of up to 2 TRPs and up to 2 panels centered on FR2 and multi-TRP.

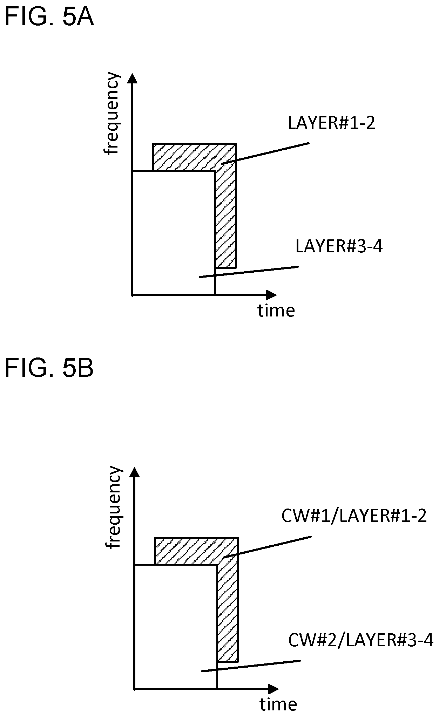

An SDM scheme for a single-DCI multi-panel simultaneous transmission PUSCH is under study. In the SDM scheme, the UE separately precodes different layers / DMRS ports for one PUSCH, and simultaneous transmission from two different UE panels is performed by using one codeword (CW) (FIG. 5A). Alternatively, it is studied that two CWs are supported by using the SDM scheme and simultaneous transmission from two different panels is performed (FIG. 5B).

FIG. 5A is a diagram to show layers in a case where simultaneous transmission from two different UE panels is performed by using one codeword (CW). In an example in FIG. 5A, one PUSCH is transmitted in one TB. FIG. 5B is a diagram to show layers in a case where simultaneous transmission from two different UE panels is performed by using two codewords (CWs). In an example in FIG. 5B, one PUSCH is transmitted in two TBs.

### (Analysis)

In a multi-panel simultaneous transmission (STxMP) SDM scheme, TPMI indication includes two options. Note that Option 1 and Option 2 correspond to first and second embodiments and third and fourth embodiments.

### {Option 1}

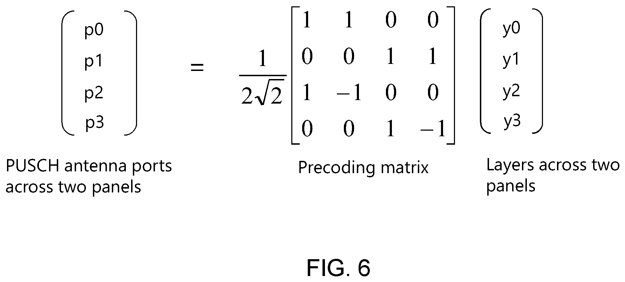

One precoding matrix is indicated for a terminal. This precoding matrix is used for all the antenna ports across two panels, and corresponds to all the layers across the two panels. FIG. 6 is a diagram to show an example of application of the precoding matrix in Option 1.

### {Option 2}

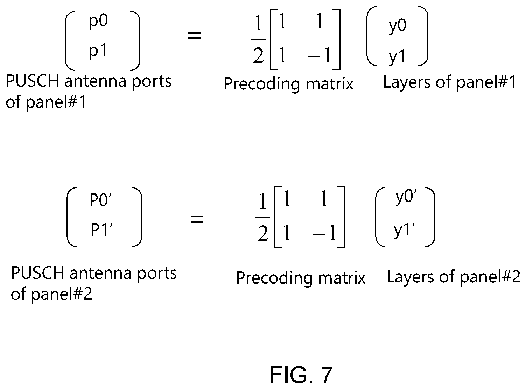

Indication of two precoding matrices is indicated for the terminal. Each precoding matrix is used for antenna ports of one panel, and corresponds to layers of one panel. FIG. 7 is a diagram to show an example of application of the precoding matrix in Option 2.

For example, it is conceivable that the number of layers across two panels is up to four, a new codebook is not introduced, and the like.

However, for example, in the case of Option 1 described above, it remains unclear how an existing precoding matrix is reused and how correspondence between antenna ports {p0, p1, p2, p3} and panels is assumed. For example, in Option 2 described above, it remains unclear how the two precoding matrices are indicated and whether a DCI field used for the indication is 1 field or 2 fields. In other words, a study has not been sufficiently made on the simultaneous transmission using a plurality of panels.

Hence, the inventors of the present invention came up with the idea of a terminal that appropriately performs simultaneous transmission using a plurality of panels.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present proposal, a panel, a beam, an SRI, TCI, a UE capability value set, an SRS resource set, and a TRP may be replaced with each other. A first/second panel may refer to a first/second beam, an SRI, an SRI field, TCI, a TCI field, a UE capability value set, an SRS resource, an SRS resource set, a TRP, a UE capability value set with a lower/higher index, an SRS resource with a lower/higher ID, an SRS resource set with a lower/higher ID, a TRP with a lower/higher ID, or an SRS resource / SRS resource set with fewer/more ports.

In the present disclosure, the SDM scheme may be indicated for the terminal by using at least one method of the following.
- Higher layer parameter for indicating transmission scheme
- DCI for indicating transmission scheme
- DCI for indicating two beams (SRIs / TCI states) / panels
- DCI for indicating two SRIs / TCI fields
- Configuration of two CB/NCB SRS resource sets
- DCI for indicating DMRS ports for two or plurality of CDM groups

Multi-panel simultaneous transmission and multi-panel UL simultaneous transmission may be interchangeably interpreted. In the present disclosure, PUSCH antenna ports / SRS ports P0, P1, P2, P3 are replaced with 1000, 1001, 1002, 1003. In the present disclosure, a precoding matrix, a precoder, and a codebook may be interchangeably interpreted. A TPMI and a TPMI index may be interchangeably interpreted. A rank and a layer may be interchangeably interpreted.

### (Radio Communication Method)

### <First Embodiment>

In the present embodiment, a UE receives an indication of one precoding matrix by using higher layer signaling / physical layer signaling. The precoding matrix is used for all the antenna ports across two panels, and corresponds to all the layers across the two panels. The UE controls, based on the precoding matrix, multi-panel simultaneous transmission (STxMP) using the two panels.

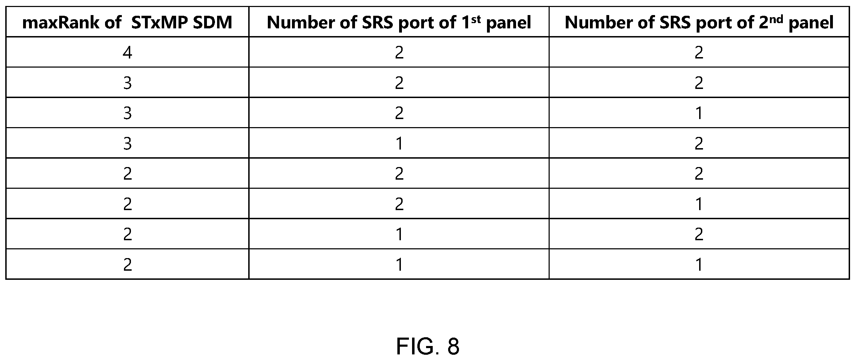

FIG. 8 is a diagram to show a relationship between the number of SRS ports of the two panels and a maximum rank of SDM of the multi-panel simultaneous transmission. When a multi-panel simultaneous transmission (STxMP) SDM scheme is indicated, a maximum rank in the multi-panel simultaneous transmission SDM scheme and the number of SRS ports for CB-based SRS resources corresponding to the two panels may be indicated for the UE by using one or some combinations in FIG. 8.

A total number of SRS ports of the two panels is up to four. An existing Rel-17 codebook supports up to four antenna ports, and thus, in this case, there is no need to introduce a new codebook.

The total number of SRS ports of the two panels is equal to or greater than or equal to the maximum rank of SDM of the multi-panel simultaneous transmission. This is a basic rule of precoding.

The total number of SRS ports of the two panels may be {2, 4} (2 or 4). In other words, in FIG. 8, there is a possibility that a case where the sum of "Number of SRS port of 1st panel" and "Number of SRS port of 2nd panel" is not 2 or 4 is not supported. The existing Rel-17 codebook does not include a codebook for 3 antenna ports, and thus, in this case, there is no need to introduce a new codebook.

### {Variations}

As a variation, the total number of SRS ports may be 3. This case will be described as a method corresponding to 3 antenna ports in Case 5/6 in the second embodiment described below.

The configuration of the maximum rank of the multi-panel simultaneous transmission SDM scheme and the numbers of SRS ports may always follow a UE capability reported by the UE.

The present embodiment clarifies a maximum rank of the multi-panel simultaneous transmission SDM scheme and the number of SRS ports of each panel in a case where one precoding matrix is indicated for the terminal.

### <Second Embodiment>

In the present embodiment, a UE receives an indication of one precoding matrix by using higher layer signaling / physical layer signaling. The precoding matrix is used for all the antenna ports across two panels, and corresponds to all the layers across the two panels. The UE controls, based on the precoding matrix, multi-panel simultaneous transmission (STxMP) using the two panels. Note that how to reuse an existing codebook, for example, which TPMI index is to be indicated, correspondence between PUSCH antenna ports and panels, and the like, will be described below for each case.

In the present embodiment, an existing non-coherent precoding matrix (CodebookSubset=NonCoherent) or an existing partial and non-coherent precoding matrix (CodebookSubset=partialAndNonCoherent) may be reused. Alternatively, only when the UE has reported capabilities of the two panels as coherent panels (coherent ports from all the panels), a fully coherent precoder may be used. When the UE has reported the capabilities of the two panels as non-coherent panels, a non-coherent or partial and non-coherent precoding matrix is used.

When SDM of multi-panel simultaneous transmission is indicated, a TPMI index with all the layers corresponding to a PUSCH antenna port of a single panel is not used (the UE does not expect a specification of the TPMI index). Alternatively, when dynamic scheduling between single-panel transmission and multi-panel simultaneous transmission is supported, TPMI indication may mean at least one of a scheduling scheme and a selected panel index. A case where one or more TPMI indices with all the layers corresponding to a PUSCH antenna port of a single panel are indicated may mean single-panel transmission.

When multi-panel simultaneous transmission is indicated, rank=1 may not be used (the UE may not expect rank=1). Alternatively, when dynamic scheduling between single-panel transmission and multi-panel simultaneous transmission is supported, rank indication may mean at least one of a scheduling scheme and a selected panel index. A case where rank=1 is indicated may mean single-panel transmission.

### {Case 1}

A case of four SRS ports / PUSCH antenna ports across the two panels (two SRS ports / PUSCH antenna ports for each panel) and two layers across the two panels will be described.

An existing non-coherent precoding matrix (CodebookSubset=NonCoherent), that is TPMI indices 0 to 5, or an existing partial and non-coherent precoding matrix (CodebookSubset=partialAndNonCoherent) for 2-layer transmission using 4 antenna ports, that is TPMI indices 0 to 13, can be reused.

Alternatively, only when the UE has reported capabilities of the two panels as coherent panels (coherent ports from all the panels), a fully coherent precoder (TPMI indices 14 to 21) may be used. When the UE has reported the capabilities of the two panels as non-coherent panels, a non-coherent or partial and non-coherent precoding matrix is used.

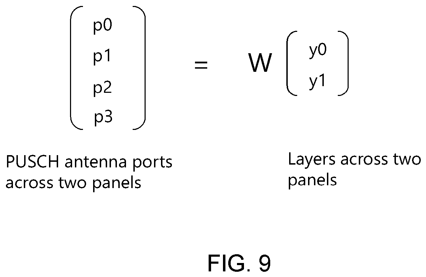

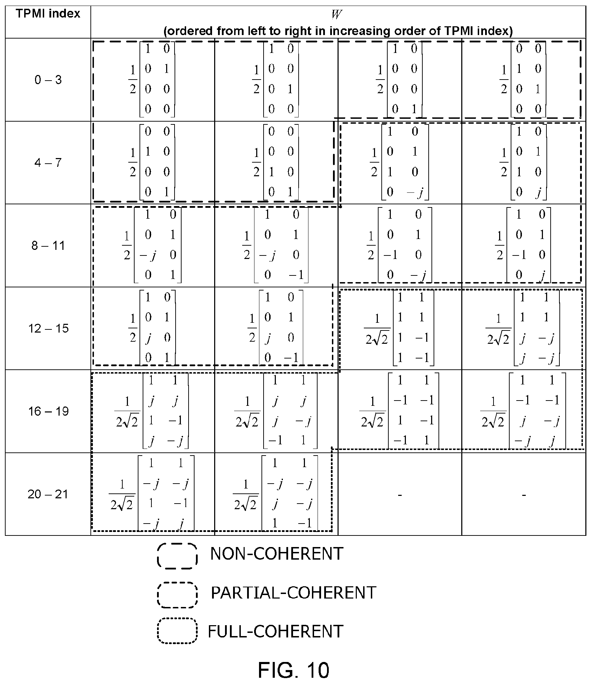

FIG. 9 is a diagram to show a relationship between the four antenna ports, the precoding matrix (W), and the two layers across the two ports in Case 1. FIG. 10 is a diagram to show the precoding matrix for two-layer transmission with 4 antenna ports and transform precoding being disabled. In FIG. 10, a noncoherent precoding matrix, a partially coherent precoding matrix, and a fully coherent precoding matrix are applied for TPMI indices 0 to 5, TPMI indices 6 to 13, and TPMI indices 14 to 21, respectively.

For correspondence between the panels and the PUSCH antenna ports / SRS ports in Case 1, the following examples are conceivable. In the present disclosure, a PUSCH antenna port / SRS port with which a layer / DMRS port is transmitted may be interpreted as a PUSCH antenna port / SRS port corresponding to a layer / DMRS port, or a PUSCH antenna port / SRS port used by a layer / DMRS port.

### <<Option 1>>

The correspondence between the panels and the PUSCH antenna ports / SRS ports is determined based on correspondence between a layer / DMRS port and the panel. For example, when a layer / DMRS port corresponds to panel #x, a PUSCH antenna port / SRS port with which the layer / DMRS port is transmitted corresponds to panel #x. For example, when layers 0, 1 (DMRS ports 0, 1) correspond to panel #1, and layers 0 and 1 (DMRS ports 0, 1) are transmitted by using PUSCH antenna ports p0, p2, PUSCH antenna ports p0, p2 correspond to panel #1.

### <<Option 2>>

It may be determined that first and third PUSCH antenna ports / SRS ports (p0, p2) and second and fourth PUSCH antenna ports / SRS ports (p1, p3) correspond to a first panel and a second panel, respectively.

### <<Option 3>>

It may be determined that the first and third PUSCH antenna ports / SRS ports (p0, p2) and the second and fourth PUSCH antenna ports / SRS ports (p1, p3) correspond to the second panel and the first panel, respectively.

### <<Option 4>>

The correspondences in Options 2 and 3 may be indicated for a terminal from a base station by using higher layer signaling / physical layer signaling (for example, RRC / MAC CE / DCI).

In Options 2 and 3, when SDM of multi-panel simultaneous transmission is indicated, TPMI indices 1 and 4 are not used, and the UE does not expect that TPMI indices 1 and 4 are indicated. This is because in this case, the two layers correspond to the same panel.

As another example, it may be determined that the first and second PUSCH antenna ports / SRS ports (p0, p1) and the third and fourth PUSCH antenna ports / SRS ports (p2, p3) correspond to the first panel (or second panel) and the second panel (or first panel), respectively. This correspondence may be indicated for the terminal from the base station by using higher layer signaling / physical layer signaling.

### <<Variations>>

In Options 2 and 3, TPMI index 1 or 4 may be indicated. When dynamic scheduling between single-panel transmission and multi-panel simultaneous transmission is supported, the TPMI indication may mean at least one of a scheduling scheme and a selected panel index. A case where TPMI index 1 or 4 is indicated may mean single-panel transmission. For example, in Option 2 or 3, TPMI index 1 being indicated and TPMI index 4 being indicated mean single-panel transmission in the first/second panel and single-panel transmission in the second/first panel, respectively.

### {Case 2}

A case of four SRS ports / PUSCH antenna ports across the two panels (two SRS ports / PUSCH antenna ports for each panel) and three layers across the two panels will be described.

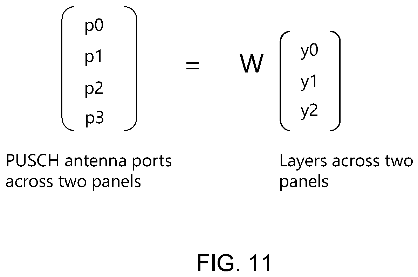

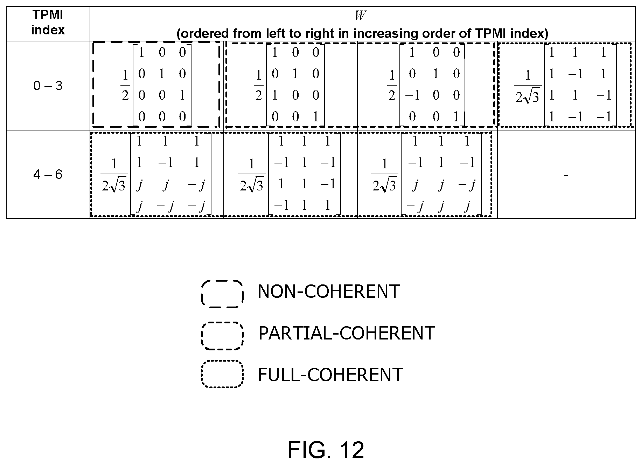

FIG. 11 is a diagram to show a relationship between the four antenna ports, the precoding matrix (W), and the three layers across the two ports in Case 2. FIG. 12 is a diagram to show the precoding matrix for three-layer transmission with 4 antenna ports and transform precoding being disabled. In FIG. 12, a noncoherent precoding matrix (precoder/codebook), a partially coherent precoding matrix, and a fully coherent precoding matrix are applied for TPMI index 0, TPMI indices 1, 2, and TPMI indices 3 to 6, respectively.

An existing non-coherent precoding matrix (CodebookSubset=NonCoherent), that is TPMI index 0, or an existing partial and non-coherent precoding matrix (CodebookSubset=partialAndNonCoherent) for 3-layer transmission using 4 antenna ports, that is TPMI indices 1 to 2, can be reused.

### <<Variations>>

Only when the UE has reported the capabilities of the two panels as coherent panels (coherent ports from all the panels), a fully coherent precoder (TPMI indices 3 to 6) may be available. When the UE has reported the capabilities of the two panels as non-coherent panels, a non-coherent or partial and non-coherent precoding matrix may be available.

Options 1 to 4 in Case 1 may also be applied to the correspondence between the panels and the PUSCH antenna ports / SRS ports in Case 2.

### {Case 3}

A case of four SRS ports / PUSCH antenna ports across the two panels (two SRS ports / PUSCH antenna ports for each panel) and four layers across the two panels will be described.

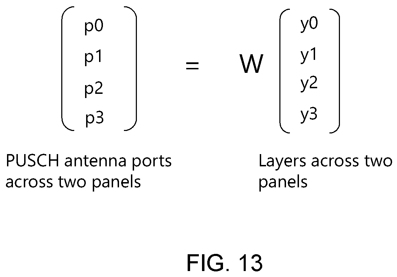

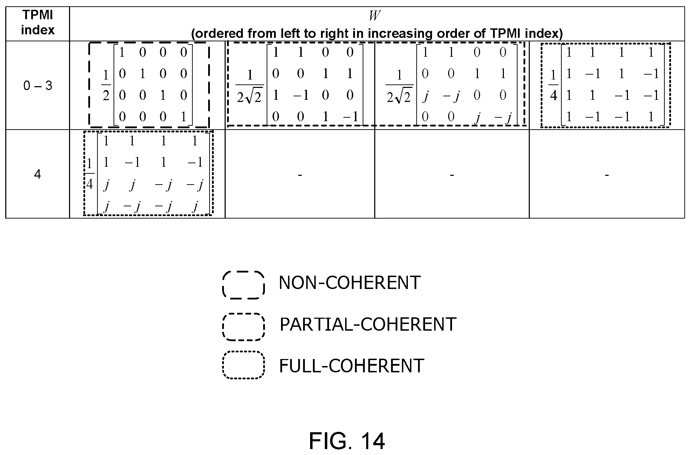

FIG. 13 is a diagram to show a relationship between the four antenna ports, the precoding matrix (W), and the four layers across the two ports in Case 2. FIG. 14 is a diagram to show the precoding matrix for four-layer transmission with 4 antenna ports and transform precoding being disabled. In FIG. 14, a noncoherent precoding matrix, a partially coherent precoding matrix, and a fully coherent precoding matrix are applied for TPMI index 0, TPMI indices 1, 2, and TPMI indices 3, 4, respectively.

An existing non-coherent precoding matrix (CodebookSubset=NonCoherent), that is TPMI index 0, or an existing partial and non-coherent precoding matrix (CodebookSubset=partialAndNonCoherent) for 4-layer transmission using 4 antenna ports, that is TPMI indices 1 to 2, can be reused.

### <<Variations>>

Only when the UE has reported the capabilities of the two panels as coherent panels (coherent ports from all the panels), a fully coherent precoder (TPMI indices 3 to 4) may be available. When the UE has reported the capabilities of the two panels as non-coherent panels, a non-coherent or partial and non-coherent precoding matrix may be available.

Options 1 to 4 in Case 1 may also be applied to the correspondence between the panels and the PUSCH antenna ports / SRS ports in Case 3.

### {Case 4}

A case of two SRS ports / PUSCH antenna ports across the two panels (one SRS port / PUSCH antenna port for each panel) and two layers across the two panels will be described.

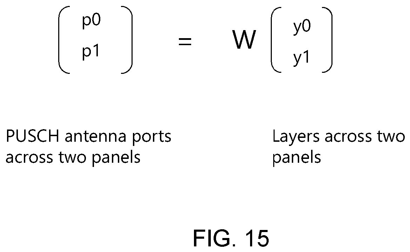

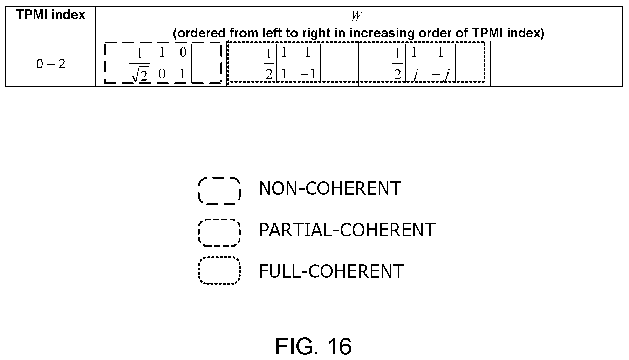

FIG. 15 is a diagram to show a relationship between the two antenna ports, the precoding matrix (W), and the two layers across the two ports in Case 4. FIG. 16 is a diagram to show the precoding matrix for two-layer transmission with 2 antenna ports and transform precoding being disabled. In FIG. 16, a noncoherent precoding matrix and a fully coherent precoding matrix are applied for TPMI index 0 and TPMI indices 1, 2, respectively.

An existing non-coherent precoding matrix (CodebookSubset=NonCoherent)) for 2-layer transmission using 2 antenna ports, that is TPMI index 0, can be reused.

Only when the UE has reported the capabilities of the two panels as coherent panels (coherent ports from all the panels), a fully coherent precoder (TPMI indices 1 to 2) can be used. When the UE has reported the capabilities of the two panels as noncoherent panels, a non-coherent or partial and non-coherent precoding matrix can be used.

For correspondence between the panels and the PUSCH antenna ports / SRS ports in Case 4, the following examples are conceivable.

### <<Option 1>>

The correspondence between the panels and the PUSCH antenna ports / SRS ports is determined based on correspondence between a layer / DMRS port and the panel. For example, when a layer / DMRS port corresponds to panel #x, a PUSCH antenna port / SRS port with which the layer / DMRS port is transmitted corresponds to panel #x.

### <<Option 2>>

It is determined that a first PUSCH antenna port / SRS port (p0) and a second PUSCH antenna port / SRS port (p1) correspond to a first panel and a second panel, respectively.

### <<Option 3>>

It is determined that the first PUSCH antenna port / SRS port (p0) and the second PUSCH antenna port / SRS port (p1) correspond to the second panel and the first panel, respectively.

### <<Option 4>>

The correspondences in Options 2 and 3 may be indicated for the terminal from the base station by using higher layer signaling / physical layer signaling (for example, RRC / MAC CE / DCI).

### {Case 5}

A case of three SRS ports / PUSCH antenna ports across the two panels (two SRS ports / PUSCH antenna ports for the first panel, one SRS port / PUSCH antenna port for the second panel) and two layers across the two panels will be described.

### <<Option 1>>

This case may not be supported. The UE may not assume this case.

### <<Option 2>>

A 4-port codebook (for example, FIG. 10) is reused, one of the antenna ports is ignored, and one of the rows of the precoding matrix is regarded as {0 0}. An existing non-coherent precoding matrix (CodebookSubset=NonCoherent), that is TPMI indices 0 to 5, or an existing partial coherent and non-coherent precoding matrix (CodebookSubset=partialAndNonCoherent) for 2-layer transmission using 4 antenna ports, that is TPMI indices 0 to 13, can be reused.

### <<Option 2-1>>

It may be determined that the fourth PUSCH antenna port / SRS port (p3) is ignored. The fourth row of the precoding matrix is regarded as {0 0}. The correspondence between the panels and the PUSCH antenna ports is the same as that obtained by ignoring the fourth PUSCH antenna port / SRS port (p3) in Options 1 to 4 in Case 1.

In this option, TPMI index 1 is not used to indicate SDM of multi-panel simultaneous transmission, and thus the UE does not expect that TPMI index 1 is indicated. This is because TPMI index 1 being indicated corresponds to single-panel transmission. As a variation, when dynamic scheduling between single-panel transmission and multi-panel simultaneous transmission is supported, the TPMI indication may mean at least one of a scheduling scheme and a selected panel index. A case where TPMI index 1 is indicated may mean single-panel transmission.

In this option, when SDM of multi-panel simultaneous transmission is indicated, TPMI indices 2, 4, and 5 are not used, and the UE does not expect that TPMI 2, 4, or 5 is indicated. This is because only one layer is present in a case where TPMI indices 2, 4, and 5 are indicated and where the fourth port is ignored.

In this option, when SDM of multi-panel simultaneous transmission is indicated, only one of each of TPMI indices 6 and 7, TPMI indices 8 and 9, TPMI indices 10 and 1, and TPMIs 12 and 13 may be used. This is because they become the same when the fourth port is ignored.

### <<Option 2-2>>

It may be determined that the third PUSCH antenna port / SRS port (p2) is ignored. In this case, the third row of the precoding matrix is regarded as {0 0}. The correspondence between the panels and the PUSCH antenna ports is the same as that obtained by ignoring the third PUSCH antenna port / SRS port (p2) in Options 1 to 4 in Case 1.

In this option, when SDM of multi-panel simultaneous transmission is indicated, TPMI indices 1, 3, 4, and 5 are not used, and the UE does not expect indication of TPMIs 1, 3, 4, and 5. This is because only one layer is present in a case where TPMI indices 1, 3, 4, and 5 are indicated and where the third port is ignored.

In this option, when SDM of multi-panel simultaneous transmission is indicated, only one of each of TPMI indices 8 and 12, TPMI indices 9 and 13, TPMI indices 6 and 10, and TPMI indices 7 and 11 may be used. This is because they become the same when the third port is ignored.

### <<Option 2-3>>

It is determined that the first PUSCH antenna port / SRS port (p0) is ignored. The first row of the precoding matrix is regarded as {0 0}. The correspondence between the panels and the PUSCH antenna ports is the same as that obtained by ignoring the first PUSCH antenna port / SRS port (p0) in Options 1 to 4 in Case 1.

In this option, when SDM of multi-panel simultaneous transmission is indicated, only TPMIs 3, 5, 6, and 7 may be available, and the UE may not expect indication of TPMI indices other than TPMIs 3, 5, 6, and 7. This is because only one layer is present in a case where the TPMI indices other than TPMI indices 3, 5, 6, and 7 are indicated and where the first port is ignored.

### <<Option 2-4>>

It may be determined that the second PUSCH antenna port / SRS port (p1) is ignored. The second row of the precoding matrix is regarded as {0 0}. The correspondence between the panels and the PUSCH antenna ports is the same as that obtained by ignoring the second PUSCH antenna port / SRS port (p1) in Options 1 to 4 in Case 1.

In this option, when SDM of multi-panel simultaneous transmission is indicated, only TPMIs 2, 5, 8, and 12 may be available, and the UE may not expect indication of TPMI indices other than TPMIs 2, 5, 8, and 12. This is because only one layer is present in a case where the TPMI indices other than TPMI indices 2, 5, 8, and 12 are indicated and where the second port is ignored.

### {Case 6}

A case of three SRS ports / PUSCH antenna ports across the two panels (two SRS ports / PUSCH antenna ports for the first panel, one SRS port / PUSCH antenna port for the second panel) and three layers across the two panels will be described.

### <<Option 1>>

This case may not be supported. The UE may not assume this case.

### <<Option 2>>

An existing non-coherent precoding matrix (CodebookSubset=NonCoherent), that is TPMI index 0, for which a 4-port codebook (for example, FIG. 12) is reused, one of the antenna ports is ignored, and one of the rows of the precoding matrix is regarded as {0 0}, or an existing partial coherent and noncoherent precoding matrix (CodebookSubset=partialAndNonCoherent) for 3-layer transmission using 4 antenna ports, that is TPMI indices 0 to 2, can be reused.

### <<Option 2-1>>

It may be determined that the fourth PUSCH antenna port / SRS port (p3) is ignored. The fourth row of the precoding matrix is regarded as {0 0}. The correspondence between the panels and the PUSCH antenna ports may be the same as that obtained by ignoring the fourth PUSCH antenna port / SRS port (p3) in Options 1 to 4 in Case 1.

### <<Option 2-2>>

It may be determined that the third PUSCH antenna port / SRS port (p2) is ignored. The third row of the precoding matrix is regarded as {0 0}. The correspondence between the panels and the PUSCH antenna ports may be the same as that obtained by ignoring the third PUSCH antenna port / SRS port (p2) in Options 1 to 4 in Case 1. In this option, when SDM of multi-panel simultaneous transmission is indicated in this case, TPMI index 0 may not be available, and the UE may not expect TPMI index 0 and may use one of TPMI indices 1 and 2.

### <<Option 2-3>>

It may be determined that the first PUSCH antenna port / SRS port (p0) is ignored. The first row of the precoding matrix is regarded as {0 0}. The correspondence between the panels and the PUSCH antenna ports may be the same as that obtained by ignoring the first PUSCH antenna port / SRS port (p0) in Options 1 to 4 in Case 1. In this option, when SDM of multi-panel simultaneous transmission is indicated, only TPMI index 1 may be available.

### <<Option 2-4>>

It may be determined that the second PUSCH antenna port / SRS port (p1) is ignored. The second row of the precoding matrix is regarded as {0 0}. The correspondence between the panels and the PUSCH antenna ports may be the same as that obtained by ignoring the second PUSCH antenna port / SRS port (p1) in Options 1 to 4 in Case 1. In this option, when SDM of multi-panel simultaneous transmission is indicated, only TPMI index 1 may be available.

According to the present embodiment, part or all of an existing specification can be reused for a precoding matrix, and thus an impact on a specification can be reduced.

### <Third Embodiment>

In the present embodiment, a UE receives an indication of two precoding matrices by using higher layer signaling / physical layer signaling. Each precoding matrix is used for antenna ports of one panel, and corresponds to layers of one panel. The UE controls, based on the precoding matrix, multi-panel simultaneous transmission (STxMP) using two panels.

### {Option 1}

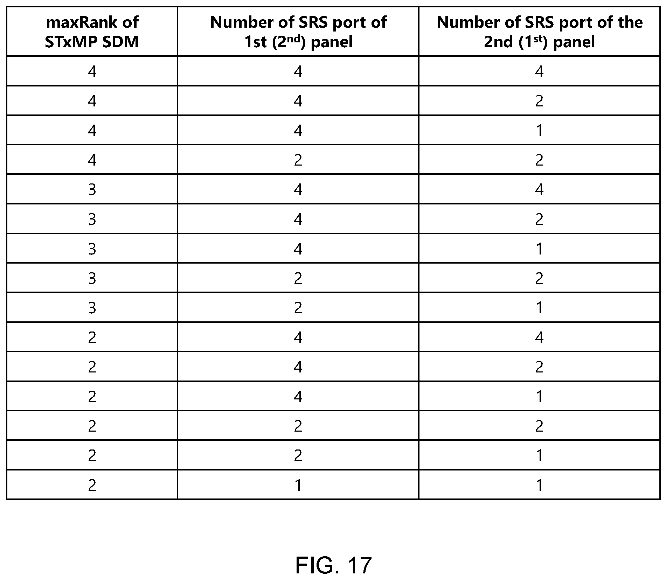

When an SDM scheme for multi-panel simultaneous transmission is indicated, the UE expects that one or a plurality of combinations shown in FIG. 17 are indicated as a maximum rank of the SDM scheme for multi-panel simultaneous transmission and the number of SRS ports for CB-based SRS resources corresponding to the two panels. In FIG. 17, a first (1st) panel and a second (2nd) panel may be replaced with each other. The maximum rank of the simultaneous multi-panel SDM scheme is the sum of ranks of the two panels.

In this option, the number of SRS ports of each panel is up to four. Compared with the first embodiment, this option includes a case that the precoding matrix is indicated for each panel together with an existing codebook and that the number of SRS ports of each panel can be up to four.

In this option, the sum of the numbers of SRS ports of the respective two panels may be equal to or greater than or equal to a maximum rank of multi-panel simultaneous transmission SDM. Note that the configuration of the maximum rank of the multi-panel simultaneous transmission SDM scheme and the numbers of SRS ports may always depend on UE capability information reported by the UE.

### {Option 2}

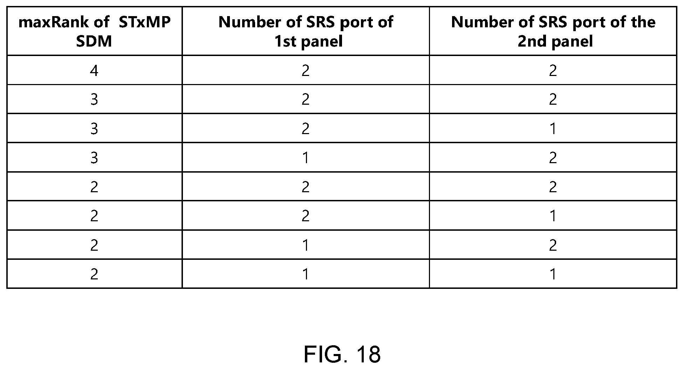

When an SDM scheme for multi-panel simultaneous transmission is indicated, the UE may expect that one or a plurality of combinations shown in FIG. 18 are indicated as a maximum rank of the SDM scheme for multi-panel simultaneous transmission and the number of SRS ports for CB-based SRS resources corresponding to the two panels. In FIG. 18, a first (1st) panel and a second (2nd) panel may be replaced with each other. The maximum rank of the multi-panel simultaneous transmission SDM scheme is the sum of ranks of the two panels.

In this option, the number of SRS ports of each panel is up to two. In other words, a total number of SRS ports of the two panels is up to four.

In this option, the total number of SRS ports of the two panels is equal to or greater than or equal to a maximum rank of multi-panel simultaneous transmission SDM. Note that the configuration of the maximum rank of the multi-panel simultaneous transmission SDM scheme and the numbers of SRS ports may always depend on UE capability information reported by the UE.

The present embodiment clarifies a maximum number of SRS ports in a case where an indication of two precoding matrices is received and where each precoding matrix is used for an antenna port of one panel.

### <Fourth Embodiment>

In the present embodiment, a UE receives an indication of two precoding matrices by using higher layer signaling / physical layer signaling. Each precoding matrix is used for antenna ports of one panel, and corresponds to layers of one panel. The UE controls, based on the precoding matrix, multi-panel simultaneous transmission (STxMP) using two panels. The following description includes a study of a case that TPMI indication uses one of 1 field or a plurality of fields.

When multi-panel simultaneous transmission SDM is applied, the UE receives DCI including at least one of the following first DCI field and second DCI field, and controls, based on the DCI, multi-panel simultaneous transmission. The first field or the second field indicates each of a rank and TPMI of a first panel and a rank and TPMI of a second panel. Options for the indication method using the DCI will be described below.

### {Option 1}

The first DCI field indicates a rank of the first panel and a TPMI of the first panel. The second DCI field indicates a rank of the second panel and a TPMI of the second panel.

### {Option 2}

The first DCI field indicates a rank of the first panel, a TPMI of the first panel, and a rank of the second panel. The second DCI field indicates a TPMI of the second panel. Note that the second DCI field indicates the TPMI of the second panel, based on the TPMI with the rank indicated by the first DCI field.

### {Option 3}

The first DCI field indicates a rank of the first panel and a rank of the second panel. The second DCI field indicates a TPMI of the first panel and a TPMI of the second panel. Note that the second DCI field indicates the TPMIs of the first and second panels, based on the TPMI with the rank indicated by the first DCI field.

### {Option 4}

The first DCI field indicates a rank of the first panel and a rank of the second panel. The second DCI field indicates a TPMI of the first panel. A third DCI field indicates a TPMI of the second panel. Note that the second and third DCI fields indicate the TPMIs of the first and second panels, based on the TPMI with the rank indicated by the first DCI field.

### {Option 5}

One DCI field indicates a rank of the first panel, a TPMI of the first panel, a rank of the second panel, and a TPMI of the second panel.

### {Variation 1}

Restriction that the number of layers of the first panel is the same as that of the second panel may be applied. For example, a TPMI field of first DCI indicates the numbers of layers of respective ones of the first and second panels. With this, a size of a TPMI field for the second panel can be reduced.

### {Variation 2}

In Options 2 to 5, the first DCI field may indicate the sum of ranks of the first panel and the second panel, and a rank of the first panel and a rank of the second panel may be determined based on the sum of the ranks, in accordance with a predefined rule. The rule may be defined in a specification, or may be configured for the terminal by higher layer signaling / physical layer signaling.

### {Variation 3}

In Options 2 to 5, the rank indication may be performed by an indication (index) indicating a combination of a rank of the first panel and a rank of the second panel. The UE may receive the index indicating the combination. Note that, in the following examples, (a, b) indicates that a rank of the first panel and a rank of the second panel are a and b, respectively.

### <<Variation 3-1>>

When only the multi-panel simultaneous transmission SDM is considered, the DCI field indicates an index indicating one rank combination from among {(1, 1), (1, 2), (2, 1), (2, 2), (3, 1), (1, 3)}. Correspondence between the index and the rank combination may be defined in a specification, or may be configured for the terminal by higher layer signaling.

### <<Variation 3-2>>

When dynamic switching between single-panel transmission and multi-panel simultaneous transmission SDM is supported, the indication of the combination can be used to indicate a rank combination for the single-panel transmission and the multi-panel simultaneous transmission SDM. For example, the index for the rank combination is indicated by using either Variation 3-2-1 or Variation 3-2-2 below.

### <<Variation 3-2-1>>

When switching between single-panel transmission with the first panel and single-panel transmission with the second panel is not supported, an index indicating one rank combination from among {(1, 1), (1, 2), (2, 1), (2, 2), (3, 1), (1, 3), (1, 0), (2, 0), (3, 0), (4, 0)} may be indicated. Note that (a, 0) indicates single-panel transmission.

### <<Variation 3-2-2>>

When switching between single-panel transmission with the first panel and single-panel transmission with the second panel is supported, an index indicating one rank combination from among {(1, 1), (1, 2), (2, 1), (2, 2), (3, 1), (1, 3), (1, 0), (0, 1), (2, 0), (0, 2), (3, 0), (0, 3), (4, 0), (0, 4)} may be indicated. Here, (a, 0) and (0, b) indicate single-panel transmission with the first panel and single-panel transmission with the second panel, respectively.

In the variation described above, there is a possibility that (1, 3) and (3, 1) are not supported. Alternatively, which of (1, 3) or (3, 1) is to be supported may depend on a UE capability reported by the UE.

In Variations 3-2-1 and 3-2-2 described above, the rank combination valid in DCI indication may be configured by RRC, may be indicated by a MAC CE, or may depend on a UE capability reported by the UE. Which of (1, 0), (0, 1), (2, 0), (0, 2), (3, 0), (0, 3), (4, 0), (0, 4)} is to be supported may be determined by at least one of a UE capability reported by the UE and a maximum rank of single-panel transmission configured by RRC.

According to the variations described above, the rank combination is indicated by the index, thereby allowing a quantity of information of the DCI to be suppressed.

### {Multi-panel Simultaneous Transmission}

When multi-panel simultaneous transmission SDM is indicated, the UE regards a maximum rank of the multi-panel simultaneous transmission SDM as X, and a rank and a TPMI of the first panel are indicated by DCI or the like using one of Options 1-1 to 1-3 below.

### <<Option 1-1>>

The indication is performed based on Rank={1, 2, ..., X}.

### <<Option 1-2>>

The indication is performed based on Rank={1, 2, ..., X-1}.

### <<Option 1-3>>

The indication is performed based on Rank={1, 2, ..., X/2}. This X/2 may be replaced with the largest integer being X/2 or greater, or the largest integer being X/2 or less.

When multi-panel simultaneous transmission SDM is indicated, a maximum rank of the multi-panel simultaneous transmission SDM and a rank of the first panel are regarded as X and Y, respectively, and one of Options 2-1 to 2-4 below may be applied to a rank and a TPMI of the second panel.

### <<Option 2-1>>

Irrespective of a rank of the first panel, a rank of the second panel is indicated from Rank={1, 2, ..., X}. Note, however, that the UE may not assume that the sum of ranks indicated for the two panels is greater than X.

### <<Option 2-2>>

Irrespective of a rank of the first panel, a rank of the second panel is indicated from Rank={1, 2, ..., X-1}. Note, however, that the UE may not assume that the sum of ranks indicated for the two panels is greater than X.

### <<Option 2-3>>

Irrespective of a rank of the first panel, a rank of the second panel is indicated from Rank={1, 2, ..., X/2}. This X/2 may be replaced with the largest integer being X/2 or greater, or the largest integer being X/2 or less.

### <<Option 2-4>>

A rank of the second panel is indicated based on a rank of the first panel. For example, the rank of the second panel is indicated from Rank={1, 2, ..., X-Y}.

Examples of Option 1-2 and Option 2-3 will be described below. Hereinafter, 1/2/3 means one of 1, 2, and 3. 1/2 means one of 1 and 2.

### <<Case Where Maximum Rank = 4, Number of SRS Ports of First Panel = 4, and Number of SRS Ports of Second Panel = 4>>

A rank and a TPMI of the first panel are indicated from rank=1/2/3. When the rank of the first panel is 1, a rank and a TPMI of the second panel are indicated from rank 1/2/3. When the rank of the first panel is 2, a rank and a TPMI of the second panel are indicated from rank=1/2. When the rank of the first panel is 3, a rank and a TPMI of the second panel are indicated from rank=1.

### <<Case Where Maximum Rank = 4, Number of SRS Ports of First Panel = 4, and Number of SRS Ports of Second Panel = 2>>

A rank and a TPMI of the first panel are indicated from rank=1/2/3. When the rank of the first panel is 1, a rank and a TPMI of the second panel are indicated from rank 1/2. When the rank of the first panel is 2, a rank and a TPMI of the second panel are indicated from rank 1/2. When the rank of the first panel is 3, a rank and a TPMI of the second panel are indicated from rank=1.

### <<Case Where Maximum Rank = 4, Number of SRS Ports of First Panel = 2, and Number of SRS Ports of Second Panel = 4>>

A rank and a TPMI of the first panel are indicated from rank=1/2. When the rank of the first panel is 1, a rank and a TPMI of the second panel are indicated from rank=1/2/3. When the rank of the first panel is 2, a rank and a TPMI of the second panel are indicated from rank 1/2.

### <<Case Where Maximum Rank = 4, Number of SRS Ports of First Panel = 4, and Number of SRS Ports of Second Panel = 1>>

A rank and a TPMI of the first panel are indicated from rank=1/2/3. A rank and a TPMI of the second panel are indicated from rank=1.

### <<Maximum Rank = 4, Number of SRS Ports of First Panel = 1, and Number of SRS Ports of Second Panel = 4>>

A rank and a TPMI of the first panel are indicated from rank=1. A rank and a TPMI of the second panel are indicated from rank=1/2/3.

### <<Maximum Rank = 4, Number of SRS Ports of First Panel = 2, and Number of SRS Ports of Second Panel = 2>>

A rank and a TPMI of the first panel are indicated from rank=1/2. When the rank of the first panel is 1, a rank and a TPMI of the second panel are indicated from rank 1/2. When the rank of the first panel is 2, a rank and a TPMI of the second panel are indicated from rank 1/2.

<<Variations>>

Rank=3 is not supported. This is because there is a possibility that layer combination 1+3 (1 layer for one panel, 3 layers for the other panel) is not supported.

### {Other Concrete Examples}

As other concrete examples of the maximum rank and the numbers of SRS ports of the first/second panels, the following (1) to (9) will be described below.

(1) Maximum Rank = 3, Number of SRS Ports of First Panel = 4, and Number of SRS Ports of Second Panel = 4
(2) Maximum Rank = 3, Number of SRS Ports of First Panel = 4, and Number of SRS Ports of Second Panel = 2
(3) Maximum Rank = 3, Number of SRS Ports of First Panel = 2, and Number of SRS Ports of Second Panel = 4
(4) Maximum Rank = 3, Number of SRS Ports of First Panel = 2, and Number of SRS Ports of Second Panel = 2
   In this case, a rank and a TPMI of the first panel are indicated from rank=1/2. When the rank of the first panel is 1, a rank and a TPMI of the second panel are indicated from rank 1/2. When the rank of the first panel is 2, a rank and a TPMI of the second panel are indicated from rank 1.
(5) Maximum Rank = 3, Number of SRS Ports of First Panel = 4, and Number of SRS Ports of Second Panel = 1
(6) Maximum Rank = 3, Number of SRS Ports of First Panel = 2, and Number of SRS Ports of Second Panel = 1
   In this case, a rank and a TPMI of the first panel are indicated from rank=1/2. A rank and a TPMI of the second panel are indicated from rank=1.
(7) Maximum Rank = 3, Number of SRS Ports of First Panel = 1, and Number of SRS Ports of Second Panel = 4
(8) Maximum Rank = 3, Number of SRS Ports of First Panel = 1, and Number of SRS Ports of Second Panel = 2
   In this case, a rank and a TPMI of the first panel are indicated from rank=1. A rank and a TPMI of the second panel are indicated from rank=1/2.
(9) Maximum Rank = 2

In this case, a rank and a TPMI of the first panel are indicated from rank=1. A rank and a TPMI of the second panel are indicated from rank=1.

The fourth embodiment clarifies the indication method for a rank and a TPMI of each panel.

### <Supplement>

### {Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by the MAC CE, the MAC CE may be identified by a new logical channel ID (LCID) being included in a MAC sub-header, the new logical channel ID being not defined in an existing specification.

In a case where the notification described above is performed by the DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to a UE in the above-described embodiments may be performed periodically, semipersistently, or aperiodically.

### {Notification of Information from UE}

Any notification of information from a UE (to a NW) (in other words, any transmission/reporting, in a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by the MAC CE, the MAC CE may be identified by a new LCID being included in a MAC sub-header, the new LCID being not defined in an existing specification.

In a case where the notification described above is performed by the UCI, the notification described above may be transmitted by using a PUCCH or a PUSCH.

Any notification of information from a UE in the above-described embodiments may be performed periodically, semipersistently, or aperiodically.

### {Application of Respective Embodiments}

At least one of the above-described embodiments may be applied to a case where a specific condition is satisfied. The specific condition may be defined in a specification, or may be notified to the UE/BS by using higher layer signaling / physical layer signaling.

At least one of the above-described embodiments may be applied only to a UE that has reported specific UE capability or that supports the specific UE capability.

The specific UE capability may indicate at least one of the following:
- supporting specific
   processing/operation/control/information for at least one of the above-described embodiments; and
   - the combination of a maximum rank and the numbers of SRS ports in the first/third embodiment being supported.

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied to a case where specific information associated with the above-described embodiments (or operation for the above-described embodiments) is configured/activated/triggered for the UE by higher layer signaling / physical layer signaling. For example, the specific information may be any RRC parameter for a specific release (for example, Rel. 18/19) or the like.

In a case where the UE does not support at least one of the specific UE capability or is not configured with the specific information, the UE may apply, for example, Rel-15/16 operation.

### (Supplementary Note)

Regarding one embodiment of the present disclosure, the following supplementary notes of the invention will be given.

### {Supplementary Note 1}

A terminal including:
a receiving section that receives an indication of one precoding matrix used for all antenna ports across two panels and corresponding to all layers across the two panels; and
a control section that controls, based on the precoding matrix, multi-panel simultaneous transmission using the two panels.

### {Supplementary Note 2}

The terminal according to supplementary note 1, wherein
a total number of SRS ports of the two panels is 2 or 4.

### {Supplementary Note 3}

The terminal according to supplementary note 1 or 2, wherein
a number of layers across the two panels is 2, 3, or 4.

### {Supplementary Note 4}

The terminal according to any one of supplementary notes 1 to 3, wherein
a total number of SRS ports of the two panels is 3.

### (Supplementary Note)

Regarding one embodiment of the present disclosure, the following supplementary notes of the invention will be given.

### {Supplementary Note 1}

A terminal including:
a receiving section that receives an indication of two precoding matrices, each of the two precoding matrices being used for an antenna port of one panel and corresponding to a layer of one panel; and
a control section that controls, based on the two precoding matrices, multi-panel simultaneous transmission using two panels.

### {Supplementary Note 2}

The terminal according to supplementary note 1, wherein
a maximum number of SRS ports of each panel is 4 or 2.

### {Supplementary Note 3}

The terminal according to supplementary note 1 or 2, wherein
the receiving section receives downlink control information (DCI) including a first field and a second field, and
the first field or the second field indicates each of a rank and a transmitted precoding matrix indicator (TPMI) of a first panel and a rank and a TPMI of a second panel.

### {Supplementary Note 4}

The terminal according to any one of supplementary notes 1 to 3, wherein
the receiving section receives an index indicating a combination of a rank of a first panel and a rank of a second panel.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

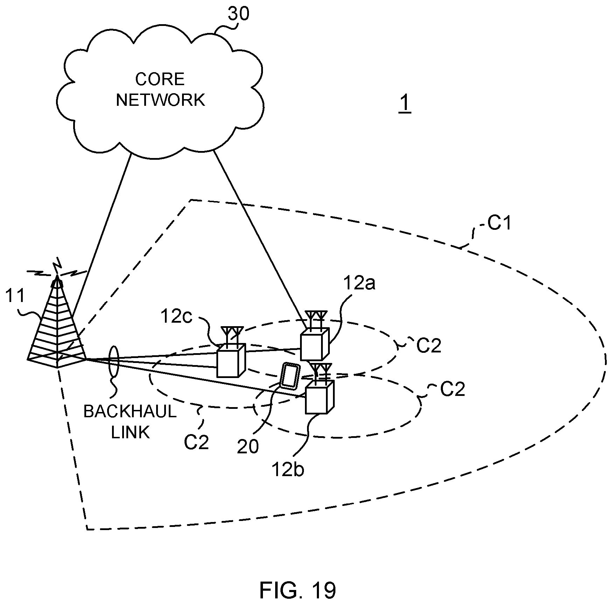

FIG. 19 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

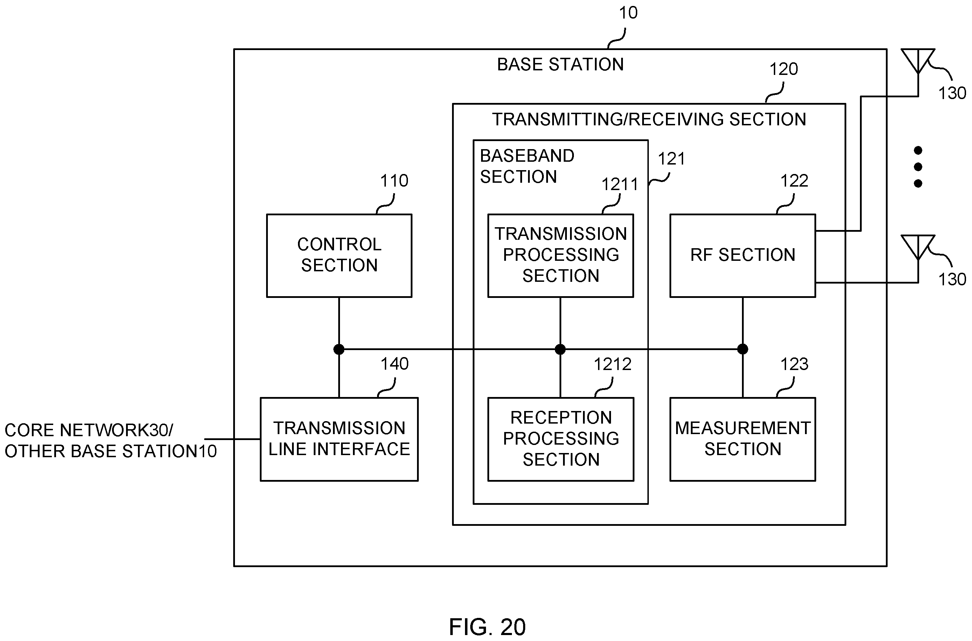

FIG. 20 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit an indication of one precoding matrix used for all antenna ports across two panels and corresponding to all layers across the two panels. The transmitting/receiving section 120 may receive a signal transmitted by multi-panel simultaneous transmission using the two panels, the multi-panel simultaneous transmission being controlled based on the precoding matrix. The control section 110 may control transmission/reception by the transmitting/receiving section 120.

The transmitting/receiving section 120 may transmit an indication of two precoding matrices. Each precoding matrix may be used for an antenna port of one panel, and may correspond to a layer of one panel. The transmitting/receiving section 120 may receive a UL signal transmitted by multi-panel simultaneous transmission using two panels, the multi-panel simultaneous transmission being controlled based on the two precoding matrices. The control section 110 may control transmission/reception by the transmitting/receiving section 120.

### (User Terminal)

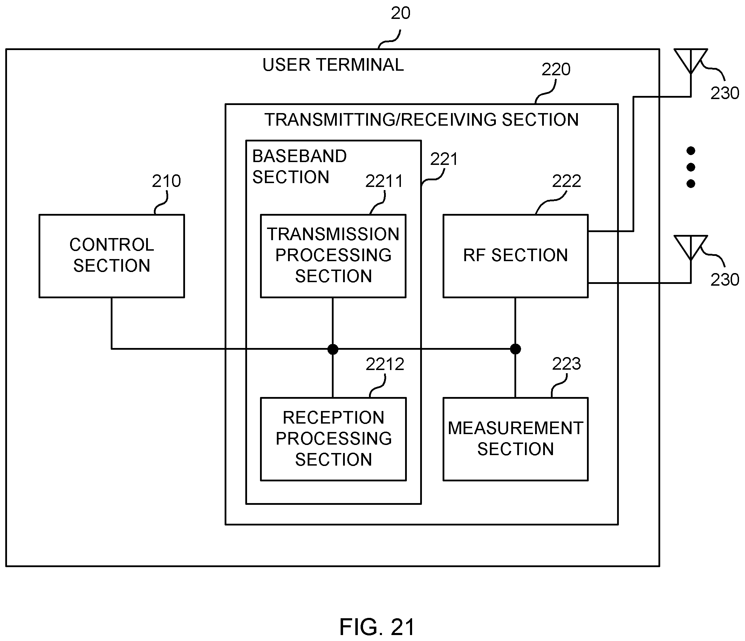

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive an indication of one precoding matrix used for all antenna ports across two panels and corresponding to all layers across the two panels. The control section 210 may control, based on the precoding matrix, multi-panel simultaneous transmission using the two panels.

A total number of SRS ports of the two panels may be 2 or 4. The number of layers across the two panels may be 2, 3, or 4. A total number of SRS ports of the two panels may be 3.

The transmitting/receiving section 220 may receive an indication of two precoding matrices. Each precoding matrix may be used for an antenna port of one panel, and may correspond to a layer of one panel. The control section 210 may control, based on the two precoding matrices, multi-panel simultaneous transmission using two panels.

A maximum number of SRS ports of each panel may be 4 or 2. The transmitting/receiving section 220 may receive downlink control information (DCI) including a first field and a second field. The first field or the second field indicates each of a rank and a transmitted precoding matrix indicator (TPMI) of a first panel and a rank and a TPMI of a second panel. The transmitting/receiving section 220 may receive an index indicating a combination of a rank of a first panel and a rank of a second panel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

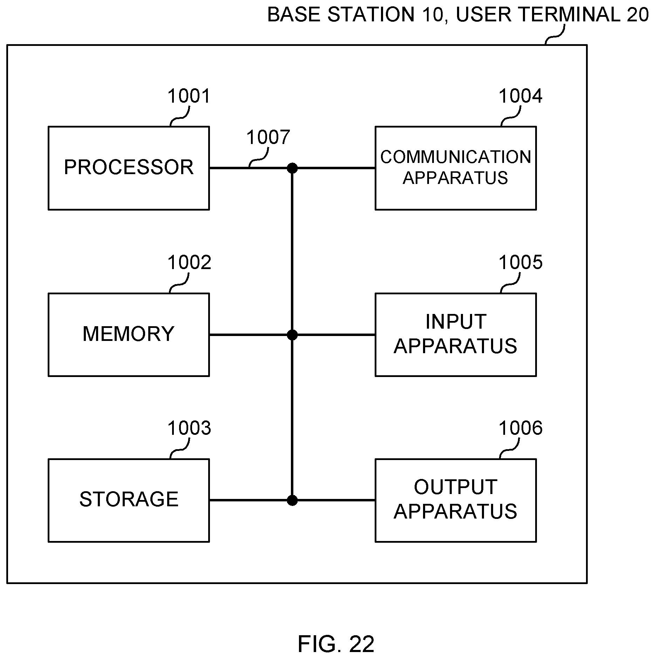

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

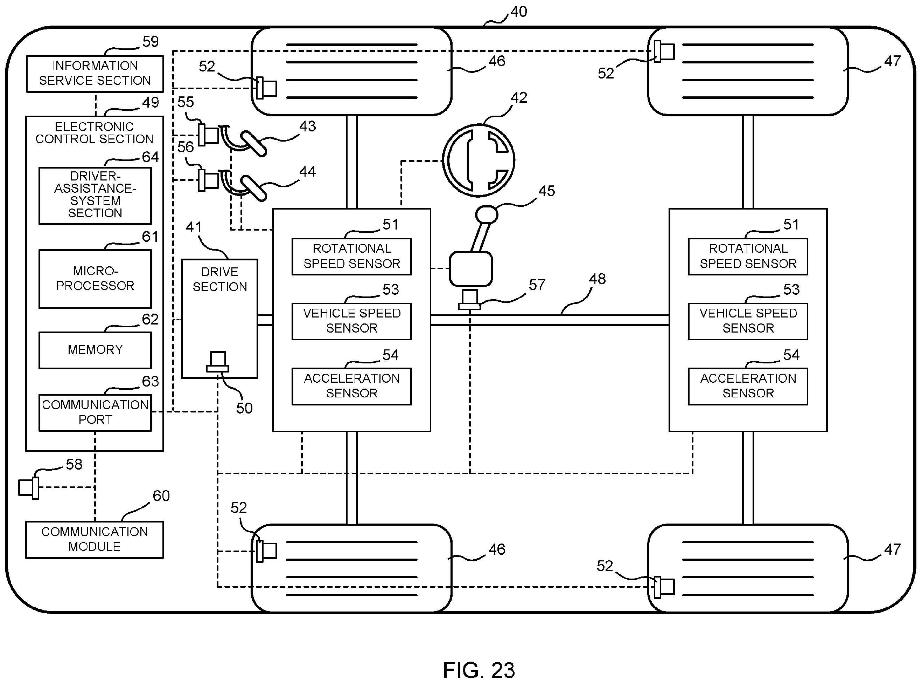

FIG. 23 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives an indication of two precoding matrices, each of the two precoding matrices being used for an antenna port of one panel and corresponding to a layer of one panel; and
a control section that controls, based on the two precoding matrices, multi-panel simultaneous transmission using two panels.

2. The terminal according to claim 1, wherein
a maximum number of SRS ports of each panel is 4 or 2.

3. The terminal according to claim 1, wherein
the receiving section receives downlink control information (DCI) including a first field and a second field, and
the first field or the second field indicates each of a rank and a transmitted precoding matrix indicator (TPMI) of a first panel and a rank and a TPMI of a second panel.

4. The terminal according to claim 1, wherein
the receiving section receives an index indicating a combination of a rank of a first panel and a rank of a second panel.

5. A radio communication method for a terminal, comprising:
receiving an indication of two precoding matrices, each of the two precoding matrices being used for an antenna port of one panel and corresponding to a layer of one panel; and
controlling, based on the two precoding matrices, multi-panel simultaneous transmission using two panels.

6. A base station comprising:
a transmitting section that transmits an indication of two precoding matrices, each of the two precoding matrices being used for an antenna port of one panel and corresponding to a layer of one panel; and
a receiving section that receives a UL signal transmitted by multi-panel simultaneous transmission using two panels, the multi-panel simultaneous transmission being controlled based on the two precoding matrices.
